# EUROPEAN PATENT APPLICATION

(11) **EP 4 489 174 A1**
(43) Date of publication of application: **08.01.2025**
(21) Application number: 23760096.0
(22) Date of filing: 24.02.2023
(51) Int. Cl.: H01M 10/0587, H01M 10/052

(54) **CYLINDRICAL NONAQUEOUS ELECTROLYTE SECONDARY BATTERY**

(30) Priority: 28.02.2022 JP 2022029547
(71) Applicant: Panasonic Energy Co., Ltd., Osaka 570-8511 (JP)
(72) Inventor: KITTAKA, Akinobu, Kadoma-shi, Osaka 571-0057 (JP); MIZAWA, Atsushi, Kadoma-shi, Osaka 571-0057 (JP); MIZUKOSHI, Fumikazu, Kadoma-shi, Osaka 571-0057 (JP)
(74) Representative: Eisenführ Speiser
(86) International application number: PCT/JP2023/006703
(87) International publication number: WO 2023/163097

(57) **Abstract**

A battery according to the present invention is provided with: a wound electrode body (14) which is obtained by winding a positive electrode (11) and a negative electrode (12) with a separator (13) being interposed therebetween; a nonaqueous electrolyte; and an outer package can in which the electrode body (14) and the nonaqueous electrolyte are contained. The separator (13), which is composed of three layers, is interposed between a leading end part (11a) of the positive electrode (11) and the negative electrode (12), which faces the leading end part (11a) on the inner winding side. It is preferable that a leading end (13c) of the separator (13) is positioned closer to the winding start point than the position where the separator is wound toward the winding end side by one turn from the position where the leading end of the separator faces the leading end part (11a) of the positive electrode (11) on the inner winding side.

## Description

### TECHNICAL FIELD

The present disclosure relates to a cylindrical non-aqueous electrolyte secondary battery.

### BACKGROUND ART

PATENT LITERATURE 1 discloses a conventional cylindrical non-aqueous electrolyte secondary battery. In this non-aqueous electrolyte secondary battery, a negative electrode having negative electrode mixture layers has a non-facing portion that does not face a positive electrode on the inner winding side of an electrode assembly, and the non-facing portion exists greater than or equal to two rounds. The non-aqueous electrolyte secondary battery restrains deformation of the electrode assembly on the inner winding side by providing the aforementioned non-facing portion on the inner winding side.

### CITATION LIST

### PATENT LITERATURE

PATENT LITERATURE 1: Japanese Unexamined Patent Application Publication No. 2013-137946

### SUMMARY

In a cylindrical non-aqueous electrolyte secondary battery, there is occasionally a case where the positive electrode and the negative electrode expand and contract under repetition of charge and discharge, and the electrode assembly deforms on the inner winding side. Deformation of a positive electrode and negative electrode facing portion causes a concern that the distance between the positive electrode and the negative electrode varies and voltage reduction becomes large. It is therefore an advantage of the present disclosure to provide a cylindrical non-aqueous electrolyte secondary battery capable of restraining voltage reduction due to deformation of a positive electrode and negative electrode facing portion.

In order to solve the aforementioned problem, there is provided a cylindrical non-aqueous electrolyte secondary battery according to the present disclosure, comprising: an electrode assembly having a positive electrode and a negative electrode wound via a separator; a non-aqueous electrolyte; and an exterior can that houses the electrode assembly and the non-aqueous electrolyte, wherein the separator that is constituted of three layers is interposed between a starting end of the positive electrode and the negative electrode that faces the starting end on an inner winding side.

According to the cylindrical non-aqueous electrolyte secondary battery according to the present disclosure, there can be restrained voltage reduction due to deformation of an electrode assembly.

### BRIEF DESCRIPTION OF DRAWINGS

FIG. 1 is an axial sectional view of a cylindrical non-aqueous electrolyte secondary battery according to an embodiment of the present disclosure.
FIG. 2 is a perspective view of an electrode assembly of the non-aqueous electrolyte secondary battery.
FIG. 3 is a plan view showing a winding structure of the inner winding side in the electrode assembly.
FIG. 4 is a diagram for explaining an example of a producing method of the electrode assembly.

### DESCRIPTION OF EMBODIMENTS

Hereafter, embodiments of a cylindrical non-aqueous electrolyte secondary battery according to the present disclosure will be described in detail with reference to the drawings. It is originally supposed to combine properly characteristic portions of the embodiments and the modifications hereafter described to construct a new embodiment. In the embodiments below, the same configurations in the drawings are given the same signs, and their duplicate description is omitted. Moreover, the drawings include some schematic diagrams, and proportions of dimensions such as lengths, widths, and depths of components do not necessarily coincide with one another between different drawings. Moreover, in the present specification, a sealing assembly 17 side of a cylindrical non-aqueous electrolyte secondary battery 10 in the axial direction (height direction) is regarded as being on the "upside", and a bottom 68 side of an exterior can 16 in the axial direction is regarded as being on the "downside". Among the constituent components described below, constituent components that are not disclosed in the independent claim indicating the highest concept are optional constituent components, not the essential constituent components. Moreover, the present disclosure is not limited to the embodiment and its modifications below, and various improvements and alterations may occur without departing from the scope of the matters disclosed in the claims of the present application and their equivalents.

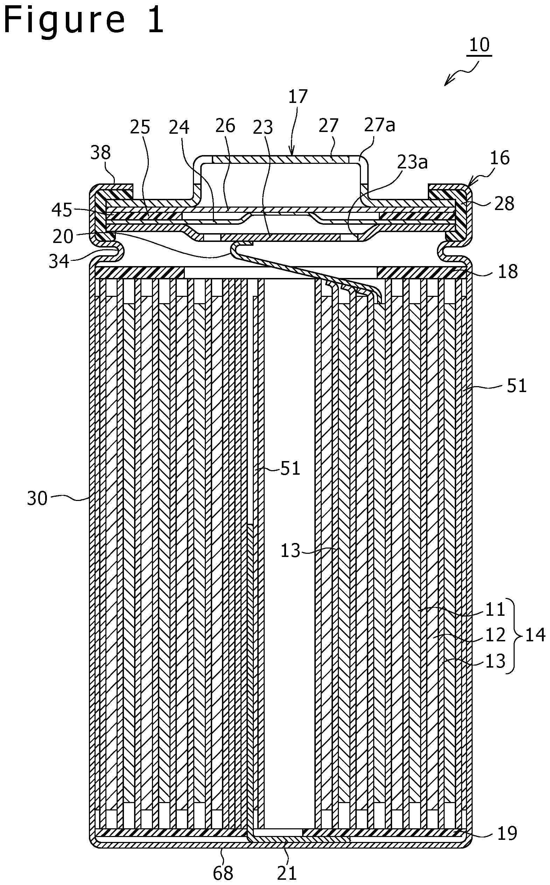

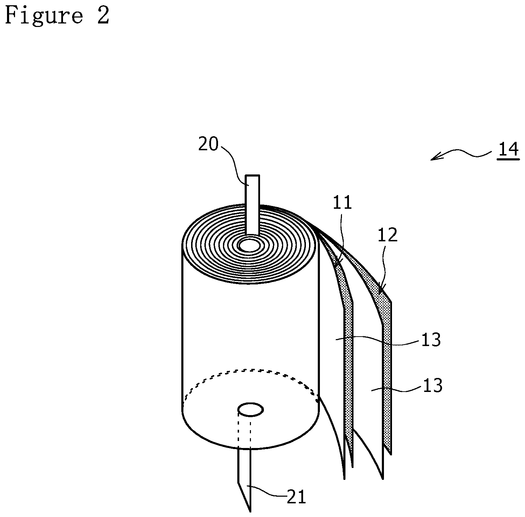

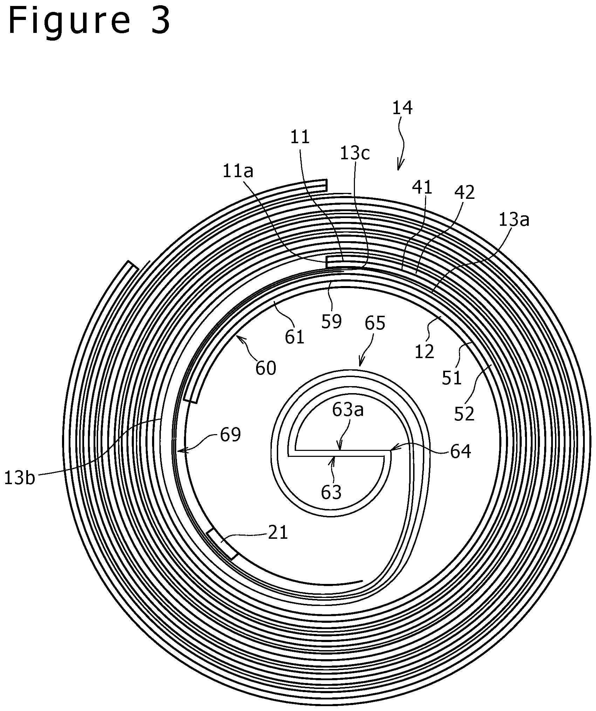

FIG. 1 is an axial sectional view of the cylindrical non-aqueous electrolyte secondary battery 10 according to an embodiment of the present disclosure, and FIG. 2 is a perspective view of an electrode assembly 14 of the non-aqueous electrolyte secondary battery 10. First, using FIG. 1 and FIG. 2, a basic configuration of the non-aqueous electrolyte secondary battery 10 is described. Notably, in FIG. 1, a winding structure of separators 13 is simplified and illustrated. A detailed winding structure of the separators 13 is described later using FIG. 3 and FIG. 5. As shown in FIG. 1, the non-aqueous electrolyte secondary battery (hereinafter simply referred to as battery) 10 comprises the winding-type electrode assembly 14, a non-aqueous electrolyte (not shown), the bottomed tubular metal-made exterior can 16 housing the electrode assembly 14 and the non-aqueous electrolyte, and the sealing assembly 17 closing an opening of the exterior can 16. As shown in FIG. 2, the electrode assembly 14 has a winding structure having a long strip-shaped positive electrode 11 and a long strip-shaped negative electrode 12 wound via two long strip-shaped separators 13. Among the two separators 13, a separator 13a is arranged on the inner winding side of the positive electrode 11, and a separator 13b is arranged on the outer winding side of the positive electrode 11.

In order to prevent precipitation of lithium, the negative electrode 12 is formed to be larger by a certain size than the positive electrode 11. Namely, the negative electrode 12 is formed to be longer than the positive electrode 11 in a longitudinal direction and a width direction (transverse direction). Moreover, the two separators 13 are formed at least to be larger by a certain size than the positive electrode 11 and, for example, are arranged such that the positive electrode 11 is interposed therebetween. The negative electrode 12 may constitute a winding starting end of the electrode assembly 14. Nevertheless, the separators 13 generally extend beyond an end of the negative electrode 12 on the winding starting side, and ends of the separators 13 on the winding starting side constitute the winding starting end of the electrode assembly 14.

The non-aqueous electrolyte includes a non-aqueous solvent and an electrolyte salt dissolved in the non-aqueous solvent. For the non-aqueous solvent, for example, there may be used esters, ethers, nitriles, amides, a mixed solvent of two kinds or more of these, and the like. The non-aqueous solvent may contain a halogen-substituted substance having halogen atom(s) such as fluorine substituted for at least part of hydrogen atoms of these solvents. Notably, the non-aqueous electrolyte is not limited to a liquid electrolyte and may be a solid electrolyte using a gelatinous polymer or the like. For the electrolyte salt, a lithium salt such as LiPF₆ is used.

The positive electrode 11 has a positive electrode core 41 (refer to FIG. 3) and positive electrode mixture layers 42 (refer to FIG. 3) formed on both surfaces of the positive electrode core 41. For the positive electrode core 41, there can be used foil of a metal, such as aluminum or aluminum alloy, that is stable in the potential range of the positive electrode 11, a film having the metal disposed in the surface layer, and the like. The positive electrode mixture layers 42 include a positive electrode active material, a conductive agent, and a binder agent. The positive electrode 11 can be produced, for example, by applying positive electrode mixture slurry including the positive electrode active material, the conductive agent, the binder agent, and the like on the positive electrode core 41, drying the coating film and afterward compressing it to form the positive electrode mixture layers 42 on both surfaces of the positive electrode core 41.

The positive electrode active material is composed of a lithium-containing metal composite oxide as a main component. Examples of a metal element contained in the lithium-containing metal composite oxide include Ni, Co, Mn, Al, B, Mg, Ti, V, Cr, Fe, Cu, Zn, Ga, Sr, Zr, Nb, In, Sn, Ta, W, and the like. A preferable example of the lithium-containing metal composite oxide is a composite oxide containing at least one of the group consisting of Ni, Co, Mn, and Al.

Examples of the conductive agent included in the positive electrode mixture layers 42 can include carbon materials such as carbon black, acetylene black, Ketjen black, and graphite. Examples of the binder agent included in the positive electrode mixture layers 42 can include fluorine resins such as polytetrafluoroethylene (PTFE) and polyvinylidene fluoride (PVdF), polyacrylonitrile (PAN), polyimide resins, acrylic resins, polyolefin resins, and the like. There may be used, together with these resins, cellulose derivatives such as carboxymethylcellulose (CMC) or its salt, polyethylene oxide (PEO), and the like.

The negative electrode 12 has a negative electrode core 51 (refer to FIG. 3) and negative electrode mixture layers 52 (refer to FIG. 3) formed on both surfaces of the negative electrode core 51. For the negative electrode core 51, there can be used foil of a metal, such as copper or copper alloy, that is stable in the potential range of the negative electrode 12, a film having the metal disposed in the surface layer, and the like. The negative electrode mixture layers 52 include a negative electrode active material and a binder agent. The negative electrode 12 can be produced, for example, by applying negative electrode mixture slurry including the negative electrode active material, the binder agent, and the like on the negative electrode core 51, drying the coating film and afterward compressing it to form the negative electrode mixture layers 52 on both surfaces of the negative electrode core 51.

For the negative electrode active material, there is generally used a carbon material that reversibly stores and releases lithium ions. Preferable examples of the carbon material include graphite such as natural graphite such as flaky graphite, massive graphite, and earthy graphite, and artificial graphite such as massive artificial graphite and graphitized mesophase carbon microbeads. The negative electrode mixture layers 52 may include, as the negative electrode active material, a Si material containing silicon (Si). Moreover, in this case, the negative electrode mixture layers 52 may include silicon oxide expressed as SiOₓ (0.5≤x≤1.6). Moreover, the negative electrode mixture layers 52 may include silicon oxide, silicon carbide, or both of silicon oxide and silicon carbide in totally greater than or equal to 5 mass%. Moreover, for the negative electrode active material, there may be used a metal, other than Si, that is alloyed with lithium, an alloy containing the metal, a compound containing the metal, and the like.

While, for the binder agent included in the negative electrode mixture layers 52, fluorine resins, PAN, polyimide resins, acrylic resins, polyolefin resins, and the like may be used as in the case of the positive electrode 11, there is preferably used styrene-butadiene rubber (SBR) or its modified substance. In the negative electrode mixture layers 52, for example, in addition to SBR or the like, there may be included CMC or its salt, polyacrylic acid (PAA) or its salt, polyvinyl alcohol, or the like.

For the separators 13, there are used porous sheets having ion permeability and insulation ability. Specific examples of the porous sheet include a microporous thin film, woven fabric, nonwoven fabric, and the like. For the material of the separators 13, there are preferably employed polyolefin resins such as polyethylene and polypropylene, cellulose, and the like. Each separator 13 may take any of a single layer structure and a stacked structure. A heat resistant layer and/or the like may be formed on a surface of the separator 13.

As shown in FIG. 1, a positive electrode lead 20 is joined to the positive electrode 11, and a negative electrode lead 21 is joined to a winding starting side of the negative electrode 12 in the longitudinal direction. The battery 10 has an insulating plate 18 on the upside of the electrode assembly 14 and an insulating plate 19 on the downside of the electrode assembly 14. The positive electrode lead 20 extends to the sealing assembly 17 side through a through hole of the insulating plate 18, and the negative electrode lead 21 extends to the bottom 68 side of the exterior can 16 through a through hole of the insulating plate 19. The positive electrode lead 20 is connected to a lower surface of a sealing plate 23 of the sealing assembly 17 by welding or the like. A terminal cap 27 constituting a top plate of the sealing assembly 17 is electrically connected to the sealing plate 23, and the terminal cap 27 works as a positive electrode terminal. Moreover, the negative electrode lead 21 is connected to an inner surface of the bottom 68 of the metal-made exterior can 16 by welding or the like, and the exterior can 16 works as a negative electrode terminal.

In the present embodiment, the positive electrode lead 20 is electrically connected to an intermediate portion such as a center portion of the positive electrode core 41 in a winding direction. Moreover, the negative electrode lead 21 is electrically connected to an end of the negative electrode core 51 on the winding starting side in the winding direction, and an end of the negative electrode core 51 on the winding finishing side in the winding direction is brought into contact with an inner surface of the exterior can 16. By electrically connecting both the winding starting side and the winding finishing side of the negative electrode 12 to the negative electrode terminal as above, paths where current flows are shortened, and an electric resistance is reduced. Nevertheless, not bringing the end of the negative electrode core on the winding finishing side in the winding direction into contact with the inner surface of the exterior can, one negative electrode lead may be electrically connected to the end of the negative electrode core on the winding finishing side in the winding direction. Otherwise, the electrode assembly may have two negative electrode leads, one of the negative electrode leads may be electrically connected to the end of the negative electrode core on the winding starting side in the winding direction, and the other of the negative electrode leads may be electrically connected to the end of the negative electrode core on the winding finishing side in the winding direction. Otherwise, the negative electrode and the exterior can may be electrically connected by bringing the end of the negative electrode core on the winding finishing side in the winding direction into contact with the inner surface of the exterior can, not using a negative electrode lead.

The battery 10 further comprises a resin-made gasket 28 arranged between the exterior can 16 and the sealing assembly 17. The sealing assembly 17 is crimped and fixed to the opening of the exterior can 16 via the gasket 28. Thereby, the inner space of the battery 10 is hermetically sealed. The gasket 28 is pinched and held by the exterior can 16 and the sealing assembly 17 and insulates the sealing assembly 17 from the exterior can 16. The gasket 28 has a role as a sealing material that keeps gastightness inside the battery and a role as an insulating material that insulates the exterior can 16 and the sealing assembly 17 from each other.

The exterior can 16 houses the electrode assembly 14 and the non-aqueous electrolyte, and has a shoulder 38, a grooved portion 34, a tubular portion 30, and the bottom 68. The grooved portion 34 can be formed, for example, by performing spinning processing on a part of the side wall of the exterior can 16 inward in a radial direction to recess it into an annular shape inward in the radial direction. The shoulder 38 is formed, when the sealing assembly 17 is crimped and fixed to the exterior can 16, by folding an upper end of the exterior can 16 inward toward a peripheral edge 45 of the sealing assembly 17.

The sealing assembly 17 has a structure in which the sealing plate 23, a lower vent member 24, an insulating member 25, an upper vent member 26, and the terminal cap 27 are stacked in the order from the electrode assembly 14 side. Each of the members constituting the sealing assembly 17 has a disc shape or a ring shape, for example, and the members except the insulating member 25 are electrically connected to one another. The sealing plate 23 has at least one through hole 23a. Moreover, the lower vent member 24 and the upper vent member 26 are connected at their center portions, and between their peripheral edges, the insulating member 25 is interposed.

When abnormal heat generation of the battery 10 occurs and an internal pressure of the battery 10 rises, the lower vent member 24 deforms so as to push the upper vent member 26 upward to the terminal cap 27 side and ruptures, and a current path between the lower vent member 24 and the upper vent member 26 is disconnected. When the internal pressure further rises, the upper vent member 26 ruptures and gas is discharged from a through hole 27a of the terminal cap 27. This discharge of the gas can prevent the internal pressure of the battery 10 from excessively rising and the battery 10 from blowing up, and safety of the battery 10 can be enhanced.

FIG. 3 is a plan view showing a winding structure of the inner winding side in the electrode assembly 14. As shown in FIG. 3, the negative electrode 12 includes a non-facing portion 60 that is wound, in the state of not facing the positive electrode 11, to the winding starting side from a facing portion 59 that faces the inner winding side of a starting end 11a of the positive electrode 11 in the winding direction. The non-facing portion 60 has a negative electrode mixture layer formation portion 61 that has the negative electrode mixture layers 52 continuously provided along the winding direction on both surfaces of the negative electrode core 51. By providing the non-facing portion 60 including the negative electrode mixture layer formation portion 61 on the winding starting side of the negative electrode 12, there can be enhanced rigidity of the negative electrode 12 on the winding starting side, and there can be restrained deformation of the electrode assembly 14 on the winding starting side.

As shown in FIG. 3, in the electrode assembly 14, a two-layer separator portion 63 obtained by superposing two layers is folded so as to describe a circular arc to the winding finishing side with a folding portion 64 being as the starting point. The separators 13 constitute a four-layer separator portion 65 obtained by superposing four layers from a point of a half round from the folding portion 64 to the winding finishing side.

When the four-layer separator portion 65 reaches a starting end of the negative electrode 12, the four-layer separator portion 65 is arranged on the outer winding side of the starting end of the negative electrode 12. When the four-layer separator portion 65 reaches a starting end 11a of the positive electrode 11, a three-layer separator portion 69 out of the four-layer separator portion 65 is arranged on the inner winding side of the positive electrode 11. The remaining one-layer separator 13b out of the four-layer separator portion 65 is arranged on the outer winding side of the positive electrode 11. The three-layer separator portion 69 extends beyond the inner winding side of the starting end 11a of the positive electrode 11. Thereby, the three-layer separator portion 69 is arranged between the starting end 11a of the positive electrode 11 and the negative electrode 12 that faces the starting end 11a on the inner winding side. Starting ends 13c of the separators are arranged at a finishing end of the three-layer separator portion 69, and the separator 13a extends from the finishing end of the three-layer separator portion 69 toward the winding finishing side to be arranged on the outer winding side of the negative electrode 12.

In the present embodiment, since the three-layer separator portion 69 is arranged on the inner winding side of the starting end 11a of the positive electrode 11 as mentioned above, there is restrained voltage reduction due to deformation of the electrode assembly 14 on the winding starting side.

In the present embodiment, each of the starting ends 13c of the two separators 13 included in the battery 10 is positioned more on the winding starting side than a position of one round to the winding finishing side from a position that faces the starting end 11a of the positive electrode 11 on the inner winding side. This allows lithium ions to move smoothly between the positive electrode mixture layers 42 and the negative electrode mixture layers 52 in a peripheral region of the starting end 11a of the positive electrode 11, and excellent battery characteristics can be preferably attained.

Notably, while in the example shown in FIG. 3, the starting ends 13c of the two separators 13 exist at substantially equivalent winding positions in the electrode assembly 14, the starting ends 13c of the two separators 13 may exist at different winding positions in the electrode assembly 14. Note that, even in this case, the starting end 13c of each separator 13 is preferably positioned more on the winding starting side than the position of one round to the winding finishing side from the position that faces the starting end 11a of the positive electrode 11 on the inner winding side.

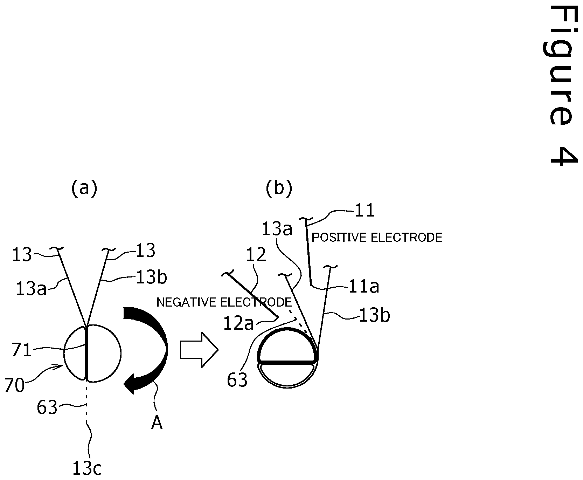

FIG. 4 is a diagram for explaining an example of a producing method of the electrode assembly 14. Notably, in FIG. 4, the region where the two separators 13 overlap is indicated by a dotted line. As shown in FIG. 4(a), the two separators 13a and 13b are pinched and held by a pinching portion 71 of a winding core 70. The two different separators 13a and 13b are fixed to the winding core 70 in the state where their starting end side protrudes from the winding core 70 by a predetermined distance. After that, the winding core 70 is rotated in the direction indicated by the arrow A in FIG. 4(a), and as shown in FIG. 4(b), the two separators 13a and 13b are wound around the winding core 70, and the two-layer separator portion 63 that includes the starting ends of the separators 13a and 13b is caused to protrude from the pinching portion 71 by a predetermined distance. The negative electrode 12 is inserted between that two-layer separator portion 63 and the separators 13 that have been wound around the winding core 70, and the positive electrode 11 is inserted between the separator 13a and the separator 13b. The positive electrode 11 and the negative electrode 12 are wound in this state to produce the electrode assembly 14.

### (Example)

### [Production of Positive Electrode]

For the positive electrode active material, aluminum-containing lithium nickel cobalt oxide (LiNi_{0.88}Co_{0.09}Al_{0.03}O₂) was used. One hundred pts. mass of LiNi_{0.88}Co_{0.09}Al_{0.03}O₂ as the positive electrode active material, 1 pt. mass of acetylene black as the conductive auxiliary agent, and 0.9 pts. mass of polyvinylidene fluoride (PVDF) as the binder agent were mixed in a solvent of N-methylpyrrolidone (NMP) to afford the positive electrode slurry

The produced positive electrode slurry was uniformly applied on both surfaces of aluminum foil with a thickness of 15 µm. In this stage, a foil exposed portion for attaching a positive electrode lead was provided. Next, after NMP was removed by a drying machine, compression was performed by a roll press machine. A thermal treatment was performed by bringing the positive electrode after the compression into contact with heated rollers, and cutting was performed into a thickness of 0.179 mm, a width of 62.6 mm, and a length of 703 mm to produce a positive electrode. An aluminum-made positive electrode lead with a width of 3.5 mm was attached to the core exposed portion of the positive electrode.

### [Production of Negative Electrode]

As the negative electrode active material, 95 pts. mass of graphite powder and 5 pts. mass of Si oxide were mixed. After that, 1 pt. mass of CMC as a thickener agent and 1 pt. mass of styrene-butadiene rubber dispersed in water as the binder agent were added to prepare the negative electrode slurry. The produced negative electrode slurry was applied on both surfaces of copper foil with a thickness of 8 µm to form a negative electrode applied portion. In this stage, a core exposed portion with a width of 14 mm for attaching a negative electrode lead to the innermost periphery was provided. After drying, compression was performed with compression rollers to adjust the negative electrode mixture layers, and cutting was performed into a thickness of 0.192 mm, a width of 64 mm, and a length of 816 mm to produce a negative electrode. A nickel-made negative electrode lead was attached to the innermost periphery of the inner periphery core exposed portion of the negative electrode.

### [Production of Non-Aqueous Electrolyte Solution]

To 100 pts. mass of a mixed solvent composed of ethylene carbonate (EC) and dimethylmethyl carbonate (DMC) (EC:DMC=1:3 in volume ratio), 5 pts. mass of vinylene carbonate (VC) was added, and LiPF₆ was dissolved in 1.5 mole/liter to prepare a non-aqueous electrolyte solution.

### [Production of Electrode Assembly]

The positive electrode lead was attached to the core exposed portion of the positive electrode, and the negative electrode lead was attached to the core exposed portion of the negative electrode. After that, the positive electrode and the negative electrode were wound via polyethylene-made separators therebetween, and a tape with a width of 9 mm and a length of 60.0 mm was pasted on the outermost periphery of an electrode assembly including the winding finishing end of the negative electrode to produce the electrode assembly. In this stage, a three-layer separator was arranged between a starting end of the positive electrode and the negative electrode that faced the starting end on the inner winding side. The three-layer separator was arranged from a position that faced the starting end of the positive electrode on the inner winding side to a position of 1/4 rounds to the winding finishing side. A core exposed portion of the negative electrode was arranged on the outermost peripheral surface of the electrode assembly.

Insulating plates were arranged on the upside and downside of the electrode assembly, the negative electrode lead was welded to a battery case, the positive electrode lead was welded to a sealing plate having an internal pressure-operational safety valve, and housing was performed inside the battery case. After that, the non-aqueous electrolyte solution was injected inside the battery case in a reduced pressure scheme. In the final stage, by crimping the opening end of the battery case onto the sealing plate via a gasket, a cylindrical non-aqueous electrolyte secondary battery of Example was produced. The capacity of the battery was 4600 mAh.

### (Comparative Example 1)

A positive electrode lead was attached to a core material exposed portion of the positive electrode, and a negative electrode lead was attached to a core material exposed portion of the negative electrode. After that, the positive electrode and the negative electrode were wound via polyethylene-made separators therebetween to produce a winding-type electrode assembly. In this stage, by controlling the lengths of the separators and an arrangement layout of the positive electrode and the negative electrode, the winding was performed such that the separator between the positive electrode and the negative electrode was one layer. In addition, the outermost periphery portion of the electrode assembly was covered by a foil exposed portion of the negative electrode. By the similar procedure to that of Example afterward, a cylindrical non-aqueous electrolyte secondary battery of Comparative Example 1 was produced. The cylindrical non-aqueous electrolyte secondary battery of Comparative Example 1 was produced as with Example except that a three-layer separator was not arranged between the starting end of the positive electrode and the negative electrode that faced the starting end on the inner winding side but the separator constituted of only one layer was arranged between the positive electrode and the negative electrode.

### (Comparative Example 2)

A cylindrical non-aqueous electrolyte secondary battery of Comparative Example 2 was produced as with Example 1 except that a three-layer separator was arranged between the starting end of the positive electrode and the negative electrode that faced the starting end on the outer winding side. The three-layer separator was arranged from a position that faced the starting end of the positive electrode on the outer winding side to a position 1/4 rounds to the winding finishing side.

### <Cycle Test>

For each of the produced batteries, in a 45°C environment, after constant current charging at 1380 mA (0.3It) was performed until reaching 4.2 V, constant voltage charging at 4.2 V was performed with a termination current of 92 mA, and after a resting time of 20 minutes, constant current discharging at a discharging current of 2300 mA (0.5 of hour rate) was performed until reaching 2.5 V. This was set to one cycle. For each of Example, Comparative Example 1, and Comparative Example 2, 100 batteries were prepared and 2000 cycles of the charge-discharge cycles were repeated.

### <Evaluation of Occurrence Rate of Voltage Reduction Articles>

After the aforementioned cycle test, each of the batteries was charged to 3.6 V. After being charged, it was stored in a 25°C environment for 48 hours to measure a voltage V1. After that, after it was stored again in the 25°C environment for 48 hours, a voltage V2 was measured. From the measurement results of V1 and V2, a voltage reduction amount [(V1-V2)/day] was calculated. Furthermore, a standard deviation (σ) of the voltage reduction amounts for all the batteries was calculated. The batteries the voltage reduction amount of each of which had greater than or equal to 2σ were regarded as voltage reduction articles.

### [Test Results]

**[Table 1]**

| | Number of Tests | Occurrence Rate of Voltage Reduction Articles |
|---|---|---|
| Example | 100 | 0%(0/100) |
| Comparative Example 1 | 100 | 2%(2/100) |
| Comparative Example 2 | 100 | 2%(2/100) |

For Comparative Examples 1 and 2, voltage reduction articles were confirmed, and for Example, no voltage reduction article was confirmed. Accordingly, by arranging a three-layer separator on the inner winding side of a starting end of a positive electrode, there can be provided a cylindrical non-aqueous electrolyte secondary battery the voltage reduction of which due to deformation of an electrode assembly is restrained.

### REFERENCE SIGNS LIST

10 Battery, 11 Positive electrode, 11a Starting end of the positive electrode, 12 Negative electrode, 12a Starting end of the negative electrode, 13, 13a, 13b Separator, 13c Starting end of the separator, 14 Electrode assembly, 16 Exterior can, 17 Sealing assembly, 18, 19 Insulating plate, 20 Positive electrode lead, 21 Negative electrode lead, 23 Sealing plate, 23a Through hole, 24 Lower vent member, 25 Insulating member, 26 Upper vent member, 27 Terminal cap, 27a Through hole, 28 Gasket, 30 Tubular portion, 34 Grooved portion, 38 Shoulder, 41 Positive electrode core, 42 Positive electrode mixture layer, 45 Peripheral edge, 51 Negative electrode core, 52 Negative electrode mixture layer, 60 Non-facing portion, 61 Negative electrode mixture layer formation portion, 63 Two-layer separator portion, 64 Folding portion, 65 Four-layer separator portion, 8 Bottom, 69 Three-layer separator portion, 70 Winding core, 71 Pinching portion.

## Claims

1. A cylindrical non-aqueous electrolyte secondary battery, comprising:
an electrode assembly having a positive electrode and a negative electrode wound via a separator;
a non-aqueous electrolyte; and
an exterior can that houses the electrode assembly and the non-aqueous electrolyte, wherein
the separator that is constituted of three layers is interposed between a starting end of the positive electrode and the negative electrode that faces the starting end on an inner winding side.

2. The cylindrical non-aqueous electrolyte secondary battery according to claim 1, wherein a starting end of the separator is positioned more on a winding starting side than a position of one round to a winding finishing side from a position that faces the starting end of the positive electrode on the inner winding side.

3. The cylindrical non-aqueous electrolyte secondary battery according to claim 1 or 2, wherein
the negative electrode has a non-facing portion that does not face the positive electrode on the winding starting side, and
the non-facing portion includes a mixture layer formation portion having a negative electrode mixture layer.
